# EUROPÄISCHE PATENTANMELDUNG

(11) **EP 2 439 422 A1**
(43) Veröffentlichungstag der Anmeldung: **11.04.2012**
(21) Anmeldenummer: 11176818.0
(22) Anmeldetag: 08.08.2011
(51) Int. Cl.: F16D 7/04, B25B 23/14, B25D 16/00

(54) **Funktionsgeometrie einer Überrastkupplung**

(30) Priorität: 07.10.2010 DE 102010042099
(71) Anmelder: Robert Bosch GmbH, 70442 Stuttgart (DE)
(72) Erfinder: Tauber, Matthias, 73087 Boll-Eckwaelden (DE)

(57) **Zusammenfassung**

Die vorliegende Erfindung betrifft ein Kupplungsteil für eine Rastkupplung, die zur Aufnahme einer Kupplungsscheibe vorgesehen ist, an der ein Übertragungselement angeordnet ist, wobei das Kupplungsteil um eine Drehachse und relativ zur Kupplungsscheibe drehbar ist und eine Rastfläche mit einer Rastkontur aufweist, die einen ersten Rastanschlag aufweist, an dem das Übertragungselement der in das Kupplungsteil aufgenommenen Kupplungsscheibe verrastbar ist, so dass die Kupplungsscheibe gemeinsam mit dem Kupplungsteil in eine Drehrichtung drehbar ist, wobei die Rastkontur weiterhin einen zweiten Rastanschlag aufweist, an dem das Übertragungselement der in das Kupplungsteil aufgenommenen Kupplungsscheibe verrastbar ist, so dass die Kupplungsscheibe gemeinsam mit dem Kupplungsteil gegen die Drehrichtung drehbar ist. Die vorliegende Erfindung betrifft weiterhin eine Rastkupplung, insbesondere für eine Handwerkzeugmaschine, mit einem erfindungsgemäßen Kupplungsteil und einer Kupplungsscheibe mit zumindest einem Übertragungselement. Die vorliegende Erfindung betrifft weiterhin eine Handwerkzeugmaschine mit einer solchen Rastkupplung.

## Beschreibung

### Stand der Technik

Die vorliegende Erfindung betrifft ein Kupplungsteil für eine Rastkupplung, das zur Aufnahme einer Kupplungsscheibe vorgesehen ist, an der ein Übertragungselement angeordnet ist, wobei das Kupplungsteil um eine Drehachse und relativ zur Kupplungsscheibe drehbar ist und eine Rastfläche mit einer Rastkontur aufweist. Die vorliegende Erfindung betrifft weiterhin eine Rastkupplung, insbesondere für eine Handwerkzeugmaschine, mit einem erfindungsgemäßen Kupplungsteil und der Kupplungsscheibe mit dem Übertragungselement. Die vorliegende Erfindung betrifft weiterhin eine Handwerkzeugmaschine mit einer solchen Rastkupplung.

Für Bohrmaschinen ist es bekannt, eine Sicherheitskupplung so vorzusehen, dass sich die Bohrmaschine bei Verkanten des Bohrers, beispielsweise in einer Mauer oder einem anderen Werkstück, oder bei Blockieren der Bohrkrone nicht unkontrolliert weiterdreht. Eine solche Bohrmaschine ist beispielsweise in der DE 100 02 748 A1 offenbart, die auch die **Fig. 1** zeigt.

Die Sicherheitskupplung ist als Rastkupplung 100 ausgebildet und weist ein als Kupplungshülse ausgebildetes Kupplungsteil 1' auf, das um eine Drehachse 3 drehbar ist, sowie eine Kupplungsscheibe 2, die zumindest teilweise in der Kupplungshülse 1' angeordnet ist. Die Kupplungshülse 1' ist mittels eines Elektromotors 5 antreibbar, wobei die Kupplungsscheibe 2 an einer abtreibenden Welle 31 drehfest angeordnet ist, und wobei ein Werkzeug 6 über die abtreibende Welle 31 antreibbar ist, beispielsweise der Bohrer einer Bohrmaschine. In Ausnehmungen 20 der Kupplungsscheibe 2, die jeweils einen Führungskanal 201 bilden, sind Übertragungselemente 21, die hier als Gleitkörper ausgebildet sind, angeordnet, die mittels Federn 212 nach außen gegen eine Rastkontur 12' der Rastfläche 111 der Kupplungshülse 1' gedrückt werden. Die Rastkontur 12' ist so ausgebildet, dass für jedes Übertragungselement 21 ein Rastanschlag 121 vorgesehen ist, an dem das Übertragungselement 21 bei ausreichend geringem Drehmoment so verrastet, dass die Kupplungsscheibe 2 mit der Kupplungshülse 1' gemeinsam in einem drehmomentübertragenden Normalbetrieb um die Drehachse 3 gedreht wird. Wird ein bestimmtes Drehmoment überschritten, werden die Übertragungselemente 21 in eine Verstellrichtung 211 gegen die Kraft der Federn 212 nach innen gedrückt und gleiten entlang der Rastkontur 12', so dass die Kupplungshülse 1' relativ zur Kupplungsscheibe 2 gedreht wird und die Sicherheitskupplung geöffnet ist.

Da die Sicherheitskupplung ab dem bestimmten Drehmoment geöffnet ist, wird ein verkanteter Bohrer oder eine blockierende Bohrkrone auch bei weiterhin angetriebener Bohrmaschine nicht weiter gedreht, so dass der Bediener geschützt ist.

Häufig wird versucht, den Bohrer durch manuelles Gegendrehen aus der Mauer oder dem Bohrstück zu lösen. Dabei ist die Sicherheitskupplung jedoch geöffnet.

Im drehmomentübertragenden Normalbetrieb wird bei einer solchen Handwerkzeugmaschine das Werkzeug in eine Werkzeugdrehrichtung angetrieben, in der Regel in Uhrzeigerrichtung, also im Rechtslauf der Maschine. Ein Antrieb gegen die Uhrzeigerrichtung, also im Linkslauf der Maschine, ist bei diesen Handwerkzeugmaschinen nicht vorgesehen.

### Offenbarung der Erfindung

Aufgabe der vorliegenden Erfindung ist es, eine Handwerkzeugmaschine, insbesondere einen Bohrhammer, so auszubilden, dass ein mit der Kupplungsscheibe verbundenes blockierendes oder verkantetes Werkzeug insbesondere manuell durch Gegendrehen lösbar ist. Eine weitere Aufgabe der Erfindung ist es, die Handwerkzeugmaschine so weiter zu bilden, dass das Werkzeug sowohl in als auch gegen die Werkzeugdrehrichtung, also sowohl im Rechtslauf als auch im Linkslauf, antreibbar ist.

Die Aufgabe wird gelöst mit einem Kupplungsteil für eine Rastkupplung, das eine Rastkontur aufweist, mit einem ersten Rastanschlag zum drehmomentübertragenden Normalbetrieb der Rastkupplung, wobei sie einen zweiten Rastanschlag aufweist zum drehmomentübertragenden Lösebetrieb bei Gegendrehen.

Erfindungsgemäß weist das Kupplungsteil demnach den zweiten Rastanschlag auf, mit dem ein an einer Kupplungsscheibe angeordnetes Übertragungselement der Rastkupplung beim Gegendrehen verrastet. Eine Rastkupplung mit einem solchen Kupplungsteil ist daher beim Gegendrehen nicht geöffnet, sondern geschlossen.

Bevorzugt wird das Werkzeug im Normalbetrieb in eine Werkzeugdrehrichtung gedreht, wobei es im Lösebetrieb mit einem Drehmoment gegen die Werkzeugdrehrichtung betrieben oder beaufschlagt wird.

Dadurch ermöglicht das Kupplungsteil zum Einen ein Drehen des Werkzeugs einer Handwerkzeugmaschine gegen die Werkzeugdrehrichtung im Linkslauf. Weiterhin ermöglicht der zweite Rastanschlag, dass das mit der Kupplungsscheibe verbundene blockierende oder verkantete Werkzeug, beispielsweise ein Bohrer oder eine Bohrkrone, welches sich beim Drehen des Werkzeugs in die Werkzeugdrehrichtung verkantet hat oder blockiert, durch manuelles Gegendrehen lösbar ist.

Als Gegendrehen wird im Folgenden sowohl ein Linkslauf der Handwerkzeugmaschine als auch ein manuelles Gegendrehen, bei dem die Handwerkzeugmaschine durch den Bediener ruckartig so gedreht wird, dass das auf das Werkzeug wirkende Drehmoment gegen die Werkzeugdrehrichtung wirkt, bezeichnet.

Die Rastkontur ist bevorzugt etwa bogenförmig oder sägezahnförmig ausgebildet. Besonders bevorzugt ist sie am ersten Rastanschlag sowie am zweiten Rastanschlag bogenförmig, es ist aber auch ein linearer Verlauf bevorzugt. Dabei weist die Rastkontur am ersten Rastanschlag bevorzugt eine ansteigende Flanke und am zweiten Rastanschlag eine abfallende Flanke auf. Besonders bevorzugt ist die Flankensteilheit der ansteigenden Flanke am ersten Rastanschlag kleiner oder gleich der Flankensteilheit der abfallenden Flanke am zweiten Rastanschlag. Dadurch ist im Lösebetrieb ein höheres Drehmoment auf eine abtreibende Welle, an der die Kupplungsscheibe drehfest angeordnet ist, übertragbar, als das höchste im Normalbetrieb auf die abtreibende Welle übertragbare Drehmoment, mit dem sich das Werkzeug verklemmen könnte.

Die Flankensteilheit am ersten sowie am zweiten Rastanschlag ist bevorzugt an das auf die abtreibende Welle übertragene Drehmoment angepasst. Dabei ist es bevorzugt, dass die Flankensteilheit umso größer ist, je höher das auf die abtreibende Welle übertragene Drehmoment beziehungsweise je größer die auf die abtreibende Welle übertragene Leistung ist. Die Flankensteilheit am ersten Rastanschlag beträgt bevorzugt etwa 95° - 140°, besonders bevorzugt etwa 103° - 125°. Die Flankensteilheit am zweiten Rastanschlag beträgt bevorzugt etwa 100° - 180°, besonders bevorzugt 120° - 130°. Diese Geometrie der Rastkontur ermöglicht, im Lösebetrieb, insbesondere beim manuellen Gegendrehen, zumindest dasselbe oder ein höheres Drehmoment auf das Werkzeug zu übertragen, als im Normalbetrieb. Bei einer Flankensteilheit der zweiten Rastkontur von 180° ist die Rastkupplung im Lösebetrieb immer geschlossen.

In einer bevorzugten Ausführungsform ist die Rastkontur an einer Rastfläche angeordnet und weist gleichmäßig um die Rastfläche verteilt mehrere Rastsektoren mit jeweils einem ersten Rastanschlag sowie einem zweiten Rastanschlag auf. Dadurch werden die auf das Kupplungsteil wirkenden Kräfte gleichmäßig um ihren Umfang verteilt. Der erste Rastanschlag eines Rastsektors ist dabei bevorzugt jeweils dem zweiten Rastanschlag eines Nachbarrastsektors benachbart angeordnet.

Das Kupplungsteil ist in einer bevorzugten Ausführungsform becherförmig als Kupplungshülse ausgebildet mit einem Rand, der sich konzentrisch zur Drehachse erstreckt und die Rastfläche mit der Rastkontur bildet, und einem Boden, der bevorzugt quer zur Drehachse angeordnet ist. Es ist ebenfalls eine Ausführungsform bevorzugt, in der das Kupplungsteil als Scheibe ausgebildet ist und sich quer zur Drehachse erstreckt, wobei die Scheibe die Rastfläche mit der Rastkontur und dem ersten und zweiten Rastanschlag bildet. Es ist weiterhin eine Ausführungsform bevorzugt, bei der das Kupplungsteil als Scheibe ausgebildet ist, mit einer Randfläche, die die Rastfläche mit der Rastkontur bildet, wobei die Kupplungsscheibe becherförmig mit einem konzentrisch um die Drehachse vorgesehenen Rand ausgebildet ist und die Übertragungselemente im Rand der Kupplungsscheibe vorgesehen sind.

Die Aufgabe wird weiterhin gelöst mit einer Rastkupplung, insbesondere für eine Handwerkzeugmaschine, mit einem erfindungsgemäßen Kupplungsteil und einer Kupplungsscheibe. In der Kupplungsscheibe ist bevorzugt zumindest ein Übertragungselement vorgesehen, das mit der Rastkontur zusammenwirkt.

Bei einer Rastkupplung, bei der das Kupplungsteil als Kupplungshülse ausgebildet ist, ist die Kupplungsscheibe mit dem Übertragungselement bevorzugt zumindest teilweise in der Kupplungshülse angeordnet, wobei sich das in der Kupplungsscheibe angeordnete Übertragungselement bevorzugt so quer zur Drehachse erstreckt, dass die Rastkupplung in radialer Richtung wirkt, wobei das Übertragungselement radial nach außen gegen die Rastkontur gedrückt wird. Bei einer Rastkupplung, bei der das Kupplungsteil als Scheibe ausgebildet ist, ist das Übertragungselement in einer bevorzugten Ausführungsform parallel der Drehachse in der Kupplungsscheibe angeordnet, so dass es in axialer Richtung gegen die Rastkontur gedrückt wird und die Rastkupplung daher in axialer Richtung wirkt. In einer weiteren bevorzugten Ausführungsform ist die Kupplungsscheibe hingegen becherförmig ausgebildet und das Übertragungselement im Rand der Kupplungsscheibe so vorgesehen, dass das Übertragungselement radial nach innen gegen die Rastkontur gedrückt wird und die Rastkupplung daher radial wirkt. In dieser Ausführungsform ist das als Scheibe ausgebildete Kupplungsteil zumindest teilweise in der Kupplungsscheibe angeordnet.

Das Kupplungsteil ist weiterhin bevorzugt um die Drehachse und relativ zur Kupplungsscheibe drehbar. Es weist vorzugsweise die Rastfläche mit der Rastkontur auf, die den ersten Rastanschlag aufweist. An dem ersten Rastanschlag ist das Übertragungselement bevorzugt so verrastbar, dass die Kupplungsscheibe gemeinsam mit dem Kupplungsteil im drehmomentübertragenden Normalbetrieb drehbar ist. Dabei wird die abtreibende Welle in die Drehrichtung gedreht, wodurch das mit der Kupplungsscheibe angetriebene Werkzeug in eine Werkzeugdrehrichtung gedreht wird. Erfindungsgemäß weist die Rastkontur weiterhin den zweiten Rastanschlag auf, an dem das Übertragungselement der Kupplungsscheibe ebenfalls verrastbar ist, und zwar entweder indem die Handwerkzeugmaschine im Linkslauf betrieben wird, oder bei manuellem Gegendrehen. Bevorzugt weist die Rastkontur, insbesondere am ersten Rastanschlag sowie am zweiten Rastanschlag, überall einen Konturradius auf, der mindestens gleich, bevorzugt aber größer einem Gleitradius einer Anlagefläche des Übertragungselements ist. Dadurch gleitet das Übertragungselement mit seiner Anlagefläche entlang der Rastkontur, ohne an dieser hängen zu bleiben. Das Übertragungselement ist bevorzugt als Gleitkörper ausgebildet. Es ist aber auch eine Ausführungsform bevorzugt, bei der das Übertragungselement als Rollkörper ausgebildet ist.

Die Aufgabe wird weiterhin gelöst mit einer Handwerkzeugmaschine mit einer Rastkupplung mit einem erfindungsgemäßen Kupplungsteil. Die Handwerkzeugmaschine erlaubt das Lösen des blockierenden oder verkanteten Werkzeugs durch manuelles Gegendrehen. Beim manuellen Gegendrehen wird die Handwerkzeugmaschine durch den Bediener manuell ruckartig gegen die Werkzeugdrehrichtung gedreht. Weiterhin erlaubt die Handwerkzeugmaschine den Linkslauf, bei dem das Werkzeug gegen die Werkzeugdrehrichtung gedreht wird. Die Handwerkzeugmaschine ist bevorzugt so ausgelegt, dass sowohl bei manuellem Gegendrehen als auch im Linkslauf der Handwerkzeugmaschine ein Lösen eines verkanteten Werkzeugs möglich ist.

In einer bevorzugten Ausführungsform ist die Handwerkzeugmaschine eine Bohrmaschine, eine Schlagbohrmaschine oder ein Bohrhammer, wobei das Werkzeug der Bohrer oder eine Bohrkrone ist.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt eine Rastkupplung gemäß dem Stand der Technik,
- **Fig. 2**: zeigt eine Ausführungsform eines erfindungsgemäßen Kupplungsteils, und zwar in **Fig. 2 (a)** in einer Draufsicht und in **Fig. 2 (b)** einen Schnitt A-A durch das Kupplungsteil, und
- **Fig. 3**: zeigt in den **Fig. 3 (a) - (e)** Ausführungsbeispiele bevorzugter Anlageflächen eines Übertragungselements,
- **Fig. 4**: zeigt in den **Fig. 4 (a) - (c)** die Betriebszustände der erfindungsgemäßen Rastkupplung an einem schematischen Ausschnitt einer Handwerkzeugmaschine.

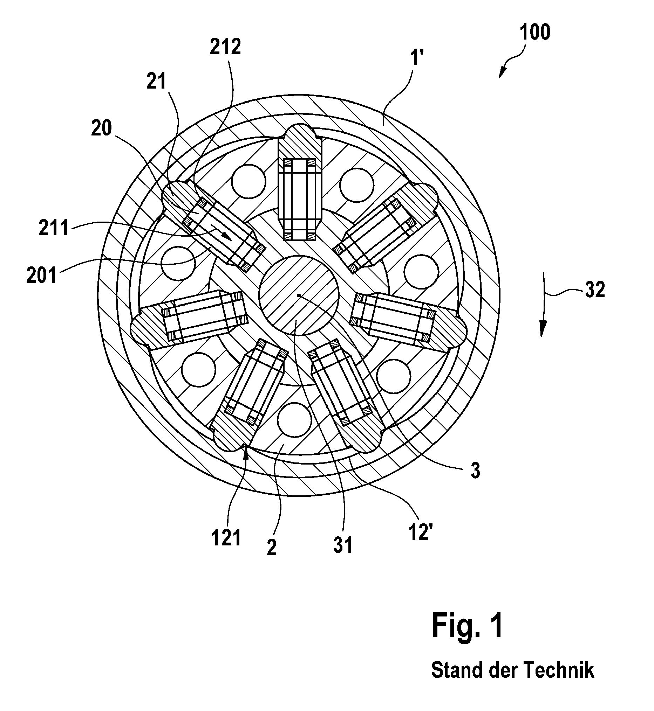

**Fig. 1** zeigt, wie oben bereits beschrieben, eine Rastkupplung 100 gemäß dem Stand der Technik. Die Rastkupplung 100 weist ein Kupplungsteil 1' mit einer Rastkontur 12' auf, welche einen ersten Rastanschlag 121 aufweist.

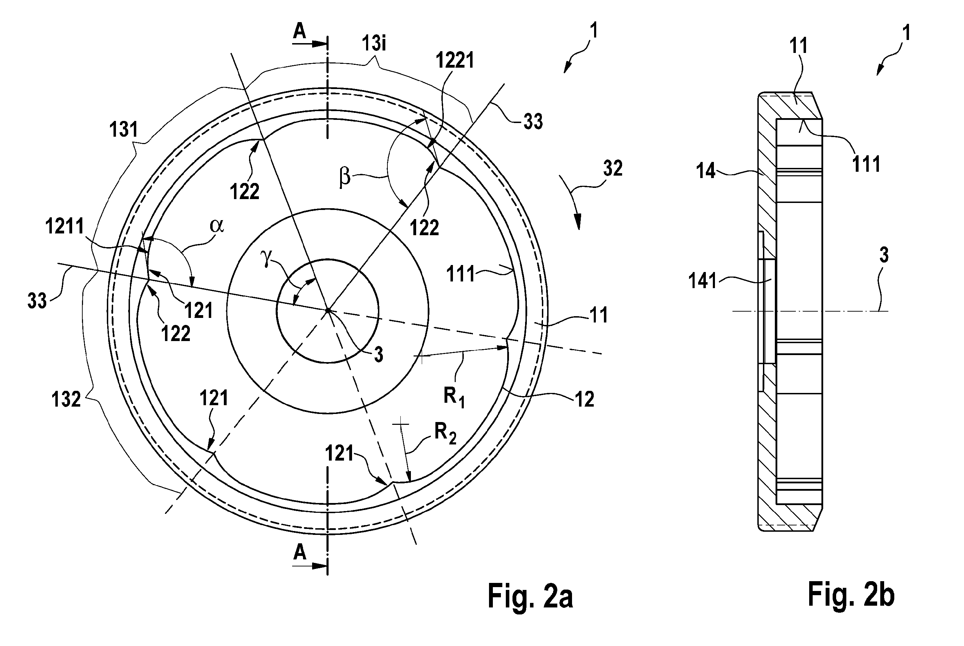

Die Kupplungsteile 1', 1 der **Fig. 1** und **Fig. 2** sind als Kupplungshülse ausgebildet und wirken in radialer Richtung. Im Folgenden werden daher die Begriffe Kupplungsteil 1', 1 und Kupplungshülse synonym verwendet.

**Fig. 2** zeigt eine Ausführungsform einer erfindungsgemäßen Kupplungshülse 1, und zwar in **Fig. 2 (a)** in einer Draufsicht und in **Fig. 2 (b)** einen Schnitt A-A durch die Kupplungshülse 1. Die Kupplungshülse 1 ist beispielsweise mit einer Kupplungsscheibe 2 betreibbar, wie sie in der Rutschkupplung 100 der **Fig. 1** gezeigt ist.

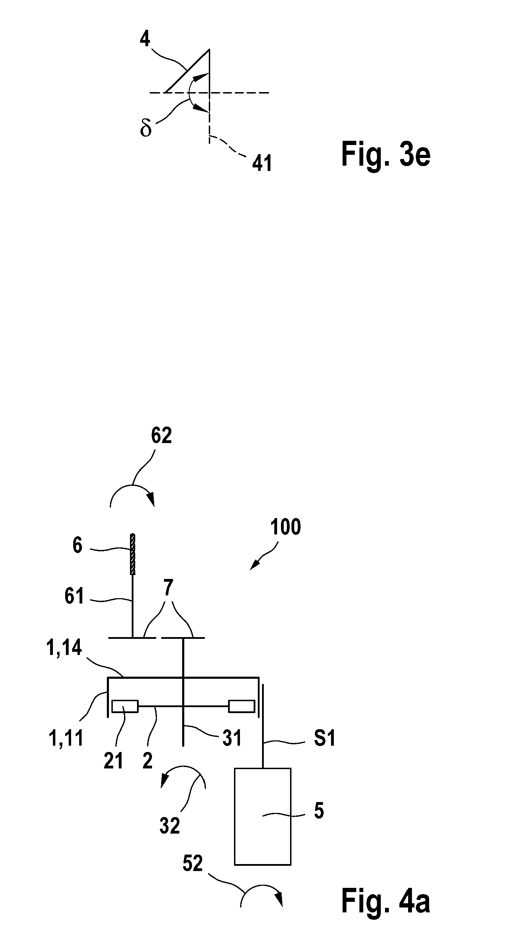

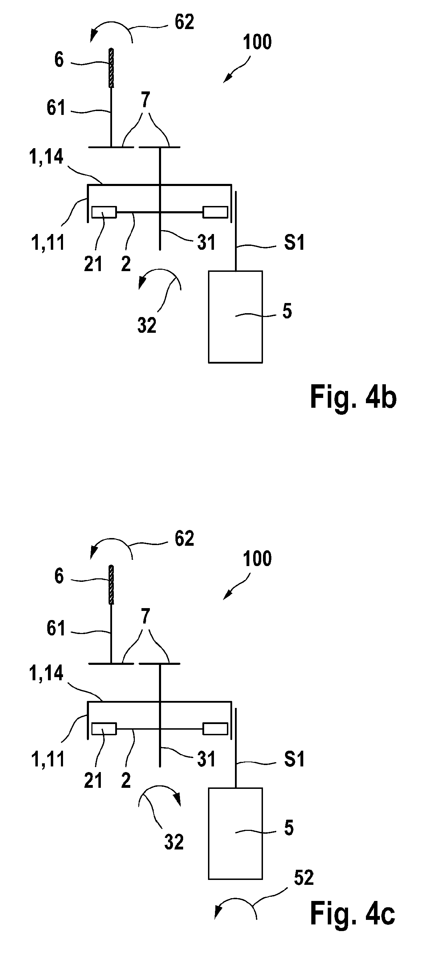

Die Kupplungshülse 1 ist becherförmig ausgebildet und weist einen Rand 11 sowie einen Boden 14 auf, wobei der Rand 11 eine Rastfläche 111 aufweist, die eine Rastkontur 12 bildet. Im Boden 14 ist eine Aufnahme 141 vorgesehen zur Aufnahme einer sich entlang einer Drehachse 3 erstreckenden abtreibenden Welle 31. Die Kupplungshülse 1 ist beispielsweise über ein Getriebe antreibbar (s. **Fig. 4****)** als auch drehfest an eine angetriebene Welle (nicht gezeigt) anordbar, und mittels eines Elektromotors 5 (s. **Fig. 4****)** um die Drehachse 3 drehbar. Die Kupplungsscheibe 2 (s. **Fig. 1****)** ist drehfest an der abtreibenden Welle 31 angeordnet.

Die Rastkontur 12 ist im vorliegenden Fall in 6 Rastsektoren 131, 132, ...13i untergliedert, die jeweils einen Winkelbereich γ von 60° umfassen. In jedem der Rastsektoren 131, 132, ...13i weist die Rastkontur 12 jeweils einen ersten Rastanschlag 121 sowie einen zweiten Rastanschlag 122 auf, wobei jeweils der erste Rastanschlag 121 des einen Rastsektors 131, 132, ...13i und der zweite Rastanschlag 122 des benachbarten Nachbarrastsektors 131, 132, ...13i benachbart zueinander angeordnet sind.

In jedem Rastsektor 131, 132, ...13i ist die Rastkontur etwa bogenförmig oder sägezahnförmig vorgesehen, wobei sie, insbesondere im Übergangsbereich zwischen einem Rastsektor 131, 132, ...13i und seinem benachbarten Nachbarrastsektor 131, 132, ...13i, so vorgesehen ist, dass ein an einer Kupplungsscheibe 2 angeordnetes Übertragungselement 21 im geöffneten Zustand der Rastkupplung 100, in dem die Kupplungsscheibe 2 relativ zur Kupplungshülse 1 gedreht wird, stetig entlang der Rastkontur 12 gleitet.

Im Bereich des ersten Rastanschlags 121 sowie im Bereich des zweiten Rastanschlags 122 ist die Rastkontur 12 jeweils bogenförmig ausgebildet und weist eine Flankensteilheit auf, die hier durch einen Winkel α zwischen einer sich radial von der Drehachse 3 erstreckenden Linie 33 und einer Tangente an die Rastkontur 12 im Bereich des ersten Rastanschlags 121, und durch einen Winkel β zwischen einer sich radial von der Drehachse 3 erstreckenden Linie 33 und einer Tangente an die Rastkontur 12 im Bereich des zweiten Rastanschlags 122, gezeigt ist.

Eine erfindungsgemäße Rastkupplung 100 weist die Kupplungshülse 1 gemäß der **Fig. 2** und beispielsweise eine Kupplungsscheibe 2 gemäß der **Fig. 1** auf. Die Kupplungsscheibe 2 treibt ein Werkzeug 6 (s. **Fig. 4****)** in und gegen eine Werkzeugdrehrichtung 62 (s. **Fig. 4****)** an.

Auch bei der Rastkupplung 100 mit einer erfindungsgemäßen Kupplungshülse 1 sind die Übertragungselemente 21 in Ausnehmungen 20 der Kupplungsscheibe 2 angeordnet und werden mittels Federn 212 radial nach außen gegen die Rastkontur 12 der Rastfläche 111 der Kupplungshülse 1 gedrückt. Und auch hier ist die Rastkontur 12 so ausgebildet, dass für jedes Übertragungselement 21 ein erster Rastanschlag 121 vorgesehen ist, an dem die Übertragungselemente 21 bei ausreichend geringem Drehmoment jeweils so verrasten, dass die Kupplungsscheibe 2 mit der Kupplungshülse 1 gemeinsam in einem drehmomentübertragenden Normalbetrieb in eine Drehrichtung 32 um die Drehachse 3 gedreht wird, wobei das Werkzeug 6 in die Werkzeugdrehrichtung 62 gedreht wird. Wird ein bestimmtes Drehmoment überschritten, werden die Übertragungselemente 21 in eine Verstellrichtung 211 gegen die Kraft der Federn 212 nach innen gedrückt und gleiten entlang der Rastkontur 12, so dass die Kupplungsscheibe 2 relativ zur Kupplungshülse 1 gedreht wird und die Rastkupplung 100 geöffnet ist.

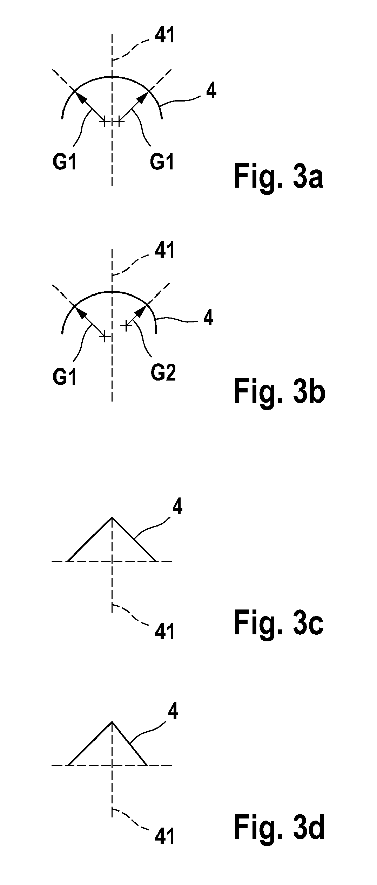

Aber im Gegensatz zur Rastkontur 12' der Kupplungshülse 1' der **Fig. 1** weist die Rastkontur 12 der Kupplungshülse 1 der **Fig. 2** den erfindungsgemäßen zweiten Rastanschlag 122 auf, an dem das Übertragungselement 21 ebenfalls verrastbar ist. Und zwar verrastet das Übertragungselement 21 beim manuellen Gegendrehen (s. **Fig. 4 (b)****)** oder im Linkslauf der Handwerkzeugmaschine (s. **Fig. 4 (c)****)** am zweiten Rastanschlag 122. Die **Fig. 3 (a) - (e)** zeigt Ausführungsbeispiele bevorzugter Anlageflächen 4 eines Übertragungselements 21, und zwar hier eines als Gleitkörper ausgebildeten Übertragungselementes 21. Die Anlagefläche 4 des Übertragungselements 21 ist bevorzugt so ausgebildet, dass sie im Normalbetrieb sowie im Lösebetrieb ein Verrasten des Übertragungselements 21 am ersten beziehungsweise zweiten Rastanschlag 121, 122, und bei geöffneter Rastkupplung 100 ein stetiges Gleiten des Übertragungselements 21 entlang der Rastkontur 12 ermöglicht.

Bei bogenförmiger Rastkontur 12 weist diese, insbesondere am ersten Rastanschlag 121 sowie am zweiten Rastanschlag 122, überall einen Konturradius auf, der mindestens gleich, bevorzugt aber größer einem Gleitradius G1, G2 der Anlagefläche 4 des Übertragungselements 21 ist. Dadurch gleitet der Übertragungselement 21 mit seiner Anlagefläche 4 entlang der Rastkontur 12, ohne an dieser hängen zu bleiben.

Die **Fig. 3 (a)** und **(b)** zeigen jeweils eine bogenförmige Anlageflächen 4 eines Übertragungselements 21, wobei die Anlagefläche 4 des Übertragungselements 21 der **Fig. 3 (a)** symmetrisch zu einer Mittelachse 41 und die Anlagefläche der **Fig. 3 (b)** unsymmetrisch zur Mittelachse 41 ausgebildet ist. Und zwar weist die Anlagefläche 4, insbesondere des Übertragungselements 21 der **Fig. 3 (b)****,** Gleitradien G1, G2 auf, die an die Radien R1, R2 der Rastkontur 12 des ersten und des zweiten Rastanschlags 121, 122 angepasst sind.

Die **Fig. 3 (c) - (e)** zeigen hingegen Anlageflächen 4 von Übertragungselementen 21, die linear ausgebildet sind. Solche Anlageflächen 4 erfordern eine zumindest teilweise linear ausgebildete Rastkontur 12, insbesondere am ersten und am zweiten Rastanschlag 121, 122, des Kupplungsteils 1. Die Anlagefläche 4 der **Fig. 3 (e)** ist bevorzugt korrespondierend zu einem sich radial von der Drehachse 3 erstreckenden zweiten Rastanschlag (hier nicht gezeigt) ausgebildet, mit dem sie aufgrund ihrer Flankensteilheit von 180°, die hier durch den Winkel δ gezeigt ist, immer verrastet.

**Fig. 4** zeigt in den **Fig. 4 (a) - (c)** die Betriebszustände der erfindungsgemäßen Rastkupplung 100 an einem schematischen Ausschnitt aus einer Handwerkzeugmaschine. Im Folgenden wird angenommen, dass die Handwerkzeugmaschine ein Bohrhammer und das Werkzeug 6 ein Bohrer ist. Daher werden die Begriffe Handwerkzeugmaschine und Bohrhammer sowie Werkzeug 6 und Bohrer im Folgenden synonym verwendet.

Dabei zeigt die **Fig. 4 (a)** den drehmomentübertragenden Normalbetrieb und die **Fig. 4 (b) - (c)** die drehmomentübertragenden Lösebetriebe, und zwar in **Fig. 4 (b)** das manuelle Gegendrehen und die **Fig. 4 (c)** den Linkslauf.

Im drehmomentübertragenden Normalbetrieb wird der Elektromotor 5 des Bohrhammers in eine Motordrehrichtung 52, und zwar in der Regel in Uhrzeigersinn, betrieben. Dadurch dreht sich eine Motorwelle 51 im Rechtslauf.

Die in **Fig. 4** gezeigte Rastkupplung 100 weist das becherförmige, als Kupplungshülse ausgebildete Kupplungsteil 1 auf, in dem die Kupplungsscheibe 2 mit den Übertragungselementen 21 zumindest teilweise angeordnet ist. Die Kupplungsscheibe 2 ist drehfest an der abtreibenden Welle 31 angeordnet und um diese drehbar. Auch die Kupplungshülse 1 ist um die abtreibende Welle 31 drehbar gelagert, und sowohl mit der Kupplungsscheibe 2 als auch relativ zu dieser drehbar.

Die abtreibende Welle 31 ist durch Getriebebauteile 7 mit einer Werkzeugwelle 61 verbunden, an der der Bohrer 6, drehfest angeordnet ist. Die Getriebebauteile 7 sind hier durch zwei in Eingriff miteinander stehende Zahnräder gezeigt.

Beim Drehen der Motorwelle 51 im Rechtlauf treibt diese die Kupplungshülse 1 in die Drehrichtung 32 an. Dadurch verrasten die in der Kupplungsscheibe 2 angeordneten Übertragungselemente 21 bei ausreichend niedrigem Drehmoment am ersten Rastanschlag 121 (s. **Fig. 2 (a)****)** und die Kupplungsscheibe 2 wird gemeinsam mit der Kupplungshülse 1 in die Drehrichtung 32 gedreht.

Dadurch wird die Werkzeugwelle 61 in die Werkzeugdrehrichtung 62, hier ebenfalls im Rechtslauf, gedreht und der Bohrer 6 wird in ein Werkstück (nicht gezeigt) eingedreht (s. **Fig. 4 (a)****).**

Bei manuellem Gegendrehen ist der Bohrer 6 verkantet oder die Bohrkrone blockiert. Außerdem wird der Elektromotor 5 nicht angetrieben und die Motorwelle 51 ist somit quasistarr. Ein Drehen der Werkzeugwelle 61 gegen die Werkzeugdrehrichtung 62, durch das die Motorwelle 51 normalerweise im Linkslauf gedreht würde, ist aufgrund der blockierten Werkzeugwelle 61 und der quasistarren Motorwelle 51 nicht möglich.

Jedoch bewirkt ein ruckartiges Drehen der Bohrmaschine gegen die Werkzeugdrehrichtung 61 ein Drehmoment, durch das die Kupplungsscheibe 2 in die Drehrichtung 32 gedreht wird, wobei die Übertragungselemente 21 am zweiten Rastanschlag 122 (s. **Fig. 2 (a)****)** verrasten (s. **Fig. 4 (b)****).**

Im Linkslauf der Bohrmaschine, in der sich die Motorwelle 51 gegen die Motordrehrichtung 52 gedreht wird, wird die Kupplungshülse 1 gegen die Drehrichtung 32 gedreht. Nachdem das Übertragungselement 21 am zweiten Rastanschlag 122 verrastet ist, werden die Kupplungsscheibe 2 und die Kupplungshülse 1 gemeinsam gegen die Drehrichtung 32 gedreht, so dass ein mit der Kupplungsscheibe 2 verbundenes Werkzeug 6 im Lösebetrieb gegen die Werkzeugdrehrichtung 62 gedreht wird (s. **Fig. 4 (c)****).** Da die Flankensteilheit β (s. **Fig. 2 (a)****)** am zweiten Rastanschlag 122 größer ist, als die Flankensteilheit α am ersten Rastanschlag 121, ist beim manuellen Gegendrehen sowie im Linkslauf ein größeres Drehmoment vom oder auf das Werkzeug 6 übertragbar, als im Normalbetrieb. Daher ist ein blockierendes oder verkantetes Werkzeug 6 im drehmomentübertragenden Lösebetrieb in der Regel durch Gegendrehen der Bohrmaschine lösbar.

## Patentansprüche

1. Kupplungsteil (1) für eine Rastkupplung (100), das eine Rastkontur (12) aufweist, mit einem ersten Rastanschlag (121) zum drehmomentübertragenden Normalbetrieb der Rastkupplung (100),
**dadurch gekennzeichnet, dass**
es einen zweiten Rastanschlag (122) aufweist zum drehmomentübertragenden Lösebetrieb bei Gegendrehen.

2. Kupplungsteil (1) nach Anspruch 1, **dadurch gekennzeichnet, dass** ein Werkzeug (6) im Normalbetrieb in eine Werkzeugdrehrichtung (61) gedreht wird, wobei es im Lösebetrieb mit einem Drehmoment gegen die Werkzeugdrehrichtung (61) betrieben oder beaufschlagt wird.

3. Kupplungsteil (1) für eine Rastkupplung (100), insbesondere nach einem der vorherigen Ansprüche, das zur Aufnahme einer Kupplungsscheibe (2) vorgesehen ist, an der ein Übertragungselement (21) angeordnet ist, wobei das Kupplungsteil (1) um eine Drehachse (3) und relativ zur Kupplungsscheibe (2) drehbar ist und eine Rastfläche (111) mit einer Rastkontur (12) aufweist, die einen ersten Rastanschlag (121) aufweist, an dem das Übertragungselement (21) der in das Kupplungsteil (1) aufgenommenen Kupplungsscheibe (2) verrastbar ist, so dass die Kupplungsscheibe (2) gemeinsam mit dem Kupplungsteil (1) in eine Drehrichtung (32) drehbar ist,
**dadurch gekennzeichnet, dass**
die Rastkontur (12) weiterhin einen zweiten Rastanschlag (122) aufweist, an dem das Übertragungselement (21) der in das Kupplungsteil (1) aufgenommenen Kupplungsscheibe (2) verrastbar ist, so dass die Kupplungsscheibe (2) gemeinsam mit dem Kupplungsteil (1) gegen die Drehrichtung (32) drehbar ist.

4. Kupplungsteil (1) nach einem der vorherigen Ansprüche, **dadurch gekennzeichnet, dass** die Rastkontur (12) sowohl am ersten Rastanschlag (121) als auch am zweiten Rastanschlag (122) bogenförmig verläuft.

5. Kupplungsteil (1) nach einem der vorherigen Ansprüche, **dadurch gekennzeichnet, dass** die bogenförmige Rastkontur (12) am ersten Rastanschlag (121) sowie am zweiten Rastanschlag (122) jeweils einen Radius (R1, R2) aufweist, der größer oder gleich einem Radius (G1) einer Anlagefläche (211) des Übertragungselements (21) ist.

6. Kupplungsteil (1) nach einem der vorherigen Ansprüche, **dadurch gekennzeichnet, dass** die Rastkontur (12) eine ansteigende Flanke (1211) am ersten Rastanschlag (121) und eine abfallende Flanke (1221) am zweiten Rastanschlag (122) aufweist.

7. Kupplungsteil (1) nach einem der vorherigen Ansprüche, **dadurch gekennzeichnet, dass** die Flankensteilheit (1212) der ansteigenden Flanke (1211) am ersten Rastanschlag (121) kleiner oder gleich der Flankensteilheit (1222) der abfallenden Flanke (1221) am zweiten Rastanschlag (122) ist.

8. Kupplungsteil (1) nach einem der vorherigen Ansprüche, **dadurch gekennzeichnet, dass** die Rastkontur (12) gleichmäßig um die Rastfläche (11) verteilt mehrere Rastsektoren (131, 132, ... 13i) mit jeweils einem ersten Rastanschlag (121) sowie einem zweiten Rastanschlag (122) aufweist.

9. Kupplungsteil (1) nach einem der vorherigen Ansprüche, **dadurch gekennzeichnet, dass** der erste Rastanschlag (121) eines Rastsektors (131, 132, ... 13i) jeweils dem zweiten Rastanschlag (122) eines Nachbarrastsektors (131, 132, ... 13i) benachbart angeordnet ist.

10. Kupplungsteil (1) nach einem der vorherigen Ansprüche, **dadurch gekennzeichnet, dass** es becherförmig ausgebildet ist mit einem Rand (13), der die Rastfläche (11) bildet, und einem Boden (14), der um eine Drehachse (3) drehbar gelagert ist.

11. Rastkupplung (100), insbesondere für eine Handwerkzeugmaschine, mit einem Kupplungsteil (1) nach einem der vorherigen Ansprüche und einer Kupplungsscheibe (2), in der zumindest ein Übertragungselement (21) angeordnet ist.

12. Rastkupplung (100) nach Anspruch 10, **dadurch gekennzeichnet, dass** der Übertragungselement (21) gegen die Rastkontur (12) gedrückt wird.

13. Handwerkzeugmaschine mit einer Rastkupplung (100) nach einem der Ansprüche 11 - 12.
